# EUROPEAN PATENT SPECIFICATION

(11) **EP 2 302 857 B1**
(45) Date of publication and mention of the grant of the patent: **02.09.2015**
(21) Application number: 10011996.5
(22) Date of filing: 26.01.1999
(51) Int. Cl.: H04L 27/26, H04B 1/16, H04W 52/02

(54) **Multicarrier transmission system with low power sleep mode and rapid-on-capability**
Mehrträgerübertragungssystem mit Schlafmodus mit niedriger Leistung und schneller Einschaltfähigkeit
Système de transmission multi-porteur avec mode veille à faible alimentation et capacité rapide de mise en action

(43) Date of publication of application: 30.03.2011
(62) Divisional of application: 07021150.3
(73) Proprietor: TQ Delta, LLC, Austin TX 78746 (US)
(72) Inventor: Greszczuk, John, A., Stow, MA 01775 MA 01775 (US); Gross, Richard, W., Acton, MA 0172 (US); Padir, Halil, Arlington, MA 02474-2108 (US); Tzannes, Michael, A., Lexington, MA 02421 (US)
(74) Representative: Von Rohr Patentanwälte Partnerschaft mbB

(56) References cited:
- EP-A- 0 473 465
- US-A- 5 452 288
- US-A- 5 852 630
- BINGHAM J A C: "MULTICARRIER MODULATION FOR DATA TRANSMISSION: AN IDEA WHOSE TIME HAS COME", IEEE COMMUNICATIONS MAGAZINE, IEEE SERVICE CENTER, PISCATAWAY, US, vol. 28, no. 5, 1 May 1990 (1990-05-01), pages 5-08,11, XP000132491, ISSN: 0163-6804, DOI: 10.1109/35.54342

## Description

### BACKGROUND OF THE INVENTION

The invention relates to multicarrier transmission systems, and comprises method and apparatus for establishing a power management sleep state in a multicarrier system.

US 5, 852, 630 A relates a DSL communication device wherein the state of component coefficients is saved so that a DSL device may initiate a warm start activation sequence at a later time.

US 5,452,288 A relates to transmission of digital data elements including radio paging information elements, wherein the data elements are transmitted according to a technique of transmission implementing a plurality of orthogonal carrier frequencies.

EP 0 473 465 A1 relates to minimizing the power consumption of a cellular telephone during stand-by mode by detecting when a received message is intended for another telephone.

### SUMMARY OF THE INTENTION

Object of the present invention is to provide a method and a transceiver allowing to reduce the power consumption avoiding delays for continuing the communication.

This object is achieved by a method according to claim 1 or by a transceiver according to claim 9. Advantageous embodiments are subject of the subclaims.
Multicarrier transmission systems provide high speed data links between communication points. Such systems have recently been introduced for communications over the local subscriber loop that connects a telephone service subscriber to a central telephone office; in this important application they are commonly referred to as "xDSL" systems, where the "x" specifies a particular variant of DSL (digital subscriber loop) communications, e. g., ADSL (asynchronous digital subscriber loop), HDSL (HighSpeed Digital Subscriber Loop), etc. These will be referred to generically herein simply as "DSL" systems. In such systems, a pair of transceivers communicate with other by dividing the overall bandwidth of the channel interconnecting the subscriber and the central office into a large number of separate subchannels, each of limited bandwidth, operating in parallel with each other. For example, one common system divides the subscriber line channel into two hundred and fifty six subchannels, each of four kilohertz bandwidth. A first group of these (e.g., one hundred ninety six) is allocated to communications from the central office to the subscriber (this is known as the "downstream" direction); a second group (e.g., fifty-five) is allocated to communications from the subscriber to the central office (this is known as the "upstream" direction). The remaining subchannels are allocated to administrative, control and overhead functions.

Data to be communicated over the link is divided into groups of bits, one group for each subchannel. The group of bits allocated to a given subchannel is modulated onto a carrier whose frequency is specific to that channel. Typically, quadrature amplitude modulation (QAM) is used for this purpose, and the group of bits is mapped into a vector defined by one of the points of a "constellation" which specifies the allowable data points for transmission over that subchannel at a particular time. Each vector or data point thus comprises a unique symbol representing a specific bit configuration for transmission as a group over its associated subchannel. During the time period allocated for transmission of a symbol (commonly referred to as a "symbol period" or "frame"), each subchannel transmits its symbol in parallel with all other subchannels so that large amounts of data can be transmitted during each frame.

The number of bits carried by a symbol is dependent on the characteristics of the subchannel over which it is to be transmitted. This may vary from one subchannel to another. The principal determinant is the signal-to-noise ratio of the subchannel. Accordingly, this parameter is measured from time to time in order to ascertain its value for each subchannel, and thus determine the number of bits to be transmitted on the particular subchannel at a given time.

The telephone channel is subject to a number of impairments which must be compensated for in order to ensure reliable transmission. Phase (delay) distortion of the transmitted signal is typically the most limiting of these impairments. This distortion is frequency-dependent, and thus components of a signal at different frequencies are shifted by varying amounts, thereby distorting the signal and increasing the likelihood of erroneous detection unless provision is made to combat it. To this end, frequency (FDQ) and time delay (TDQ) equalizers are commonly incorporated into the transmission channel in order to equalize the phase (time) delay across the channel frequency band.

Other impairments also exist. For example, frequency-dependent signal attenuation adversely affects signal transmission on the telephone line. This is compensated by the use of gain equalizers on the line. Echo on the line is handled by the use of echo cancellers, and phase and frequency offsets which may arise, for example, from the use of frequency-division-multiplexing in the telephone system must also be corrected for.

The problem of signal impairment is especially serious in those xDSL configurations which carry the DSL communications on a common line with ordinary voice communications but which omit the use of a "splitter" at either the subscriber premises or the central office or both. A "splitter" is basically a filter which separates the low-frequency voice communications (e.g., from zero to four kilohertz) from the higher-frequency data communications (which may extend up into the megahertz band) and provides a strong degree of isolation between the two. In the absence of a splitter, unique provisions must be made to accommodate voice and data communications on the same line. For a more detailed description of the problem and its solution, see the copending application of Richard Gross et al. entitled "Splitterless Multicarrier Modem", Serial No, ***, filed ***, and assigned to the assignee of the present invention.

Because of their extensive use in Internet communications as well as in other applications, DSL transceivers are commonly maintained in the "on" state, ready to transmit or receive once they have been installed and initialized. Thus, such modems consume a significant amount of power, even when they are not actively transmitting or receiving data. It is generally desirable to limit this power consumption, both for environmental reasons as well as to prolong the life of the equipment. Further, such modems may be implemented or incorporated in part or in whole in computer equipment such as in personal computers for home and business use, and such computers increasingly incorporate power conservation procedures. See, for example, U.S. Patent No. 5,428,790, "Computer Power Management System", issued June 27,1995 on the application of L. D. Harper. Thus, it is desirable to provide an ADSL modem which can accommodate power conservation procedures.

Because of the complexity of DSL transceivers, and the conditions under which they must operate, it is necessary to initialize them prior to the transmission and reception of data. This initialization includes, *inter alia,* channel corrections such as "training" the frequency- and time-domain equalizers and the echo cancellers; setting the channel gains; adjusting for phase and frequency offsets; and the like. Additionally, it includes measuring the signal-to-noise ratio of each of the subchannels, calculating the bit-allocation tables characteristic of each under given conditions of transmission, and exchanging these tables with other modems with a given modem communicates. For more detailed discussion of these procedures, reefer to the application of Richard Gross et al., cited above and incorporated herein by reference. These procedures can require from tens to hundreds of seconds. In a new installation, the time required is inconsequential. However, in an already-operating installation, the time required to initialize or re-initialize the system after a suspension of operation in connection with power conservation is generally unacceptable, since it is typically desired to have the modem respond to request for service nearly instantaneously.

Accordingly, it is an object of the invention to provide a multicarrier transmission system having a low power sleep mode and a rapid-on capability.

Further, it is an object of the invention to provide a multicarrier transmission system for use in digital subscriber line communications that can rapidly switch from a sleep mode to a full-on condition.

Still another object of the invention is to provide a DSL system that can readily be integrated into a computer having a low power sleep mode and which is capable of rapid return to full operation.

### BRIEF DESCRIPTION OF THE DRAWINGS

The invention description below refers to the accompanying drawings, of which:
Fig. 1 is a block and line diagram of a multicarrier transmission system in accordance with the present invention; and
Fig. 2 is a flow diagram of the operation of the present invention.

### DETAILED DESCRIPTION OF AN ILLUSTRATIVE EMBODIMENT

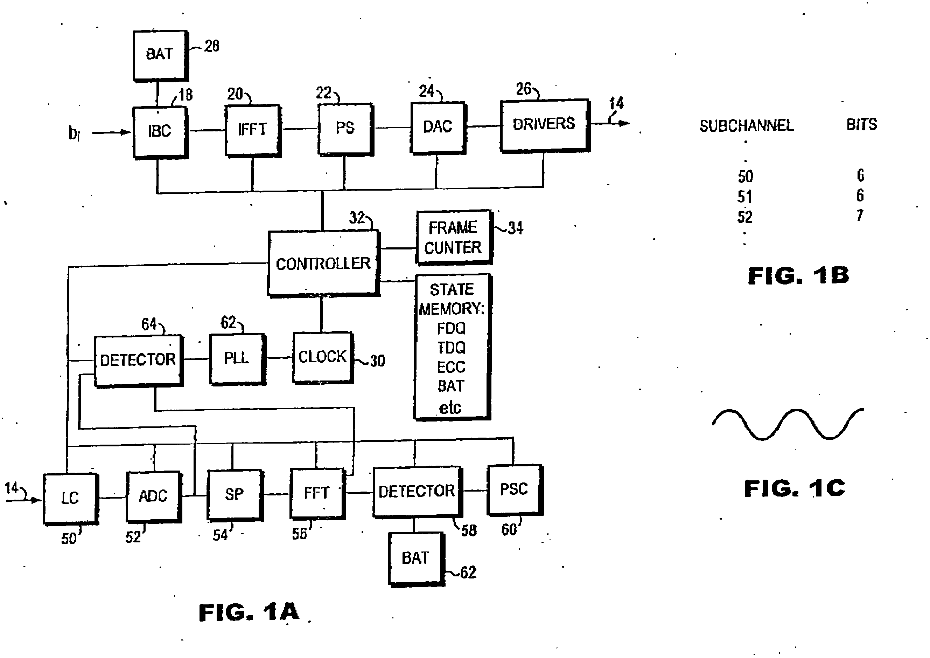

In Figure 1, a DSL transceiver 10 in accordance with the present invention has a transmitter section 12 for transmitting data over a digital subscriber line 14 and a receiver section 16 for receiving data from the line. The transmitter section 12 is formed from an input buffer and converter 18 that receives a serial string of data (e.g., binary digits) to be transmitted and converts the data into a plurality of pairs of complex-valued symbols Xᵢ and their conjugates X_{N-i} =X*ᵢ, i = 0,1, ....N. These pairs of symbols are applied to an Inverse Fast Fourier Transform (IFFT) 20 to provide real time output signals xⱼ, j = 0, 1, .....N/2 -1. The latter in tum are converted to serial form in a parallel-to-serial converter 22 and then applied to a digital-to-analog converter 24 for application to a line driver 26. The converter may apply a cyclic prefix to the signals xⱼ to combat intersymbol interference caused by the transmission medium. The driver 26 may incorporate a gain control section 26a for controlling the signal amplitude (and thus power) as it is applied to a communication channel such as a digital subscriber line 24.

IFFT 20 may be viewed as a data modulator. The symbols Xᵢ, and their conjugates X_{N-i}, correspond to data points defining signal vectors in a quadrature amplitude modulation (QAM) constellation set. The converter 18 forms the respective symbols from the input data with the aid of a bit allocation table (BAT) 28 which specifies, for each subchannel, the number of bits to be carried by the symbol transmitted over that subchannel, and thus defines the data point to be associated with the symbol. This table is typically calculated at the transceiver and transmitted to other transceivers with which the instant transceiver communicates, to thereby enable them to decode the symbols received by them from the instant transceiver.

The number of bits which each symbol carries is determined by the characteristics of the subchannel over which the symbol is to be transmitted, and particularly by the signal-to-noise ratio of the subchannel. Procedure for this calculation are known. Figure 1A shows an example of such a table as formed and stored at transceiver 10. Thus, the symbol to be transmitted over subchannel 50 may be determined to have an allocation of six bits; that of subchanel 51, six bits; that of subchannel 52, seven bits, etc.

A Clock 30 controls the timing of the operation of the transmitter 12. It supplies input to a Controller 32 which controls the individual units of the transmitter. In the case of a transceiver located at a central telephone office, the clock 30 typically is a master clock to which a remote transceiver, such as at a subscriber premises, will be synchronized. In the case of a transceiver at the subscriber premises, such as is shown her for purposes of illustration, the clock is derived from the master clock at the central office as described more fully below in connection with the receiver portion of the transceiver. A Frame Counter (FC) 36 connected to the controller 32 maintains a count of the number of frames of data transmitted or received by the transceiver. Finally, a State Memory (SM) connected to the controller 32 records the state of the transceiver for reasons discussed more fully below.

Turning now to the receiver section 16, it is formed from a line conditioner 50; an analog-to-digital converter (ADC) 52; a serial-to-parallel converter 54; a Fast Fourier Transform (FFT) section 56; a detector 58; and a parallel-to-serial converter 60. The conditioner 50 compensates for transmission distortions introduced by the line 14, and commonly includes a frequency-domain equalizer (FDQ) 50a; a time domain equalizer (TDQ) 50b; and an echo canceller (EC) 50c, among other elements. The ADC 52 converts the received signal to digital form and applies it to the serial-to-parallel converter 54. The converter 54 removes any cyclic prefix that may have been appended to the signal before it was transmitted, and applies the resultant signal to the FFT 56 which effectively "demodulates" the received signal. The output of the FFI is applied to decoder 58 which, in conjunction with a bit-allocation-table 62, recovers the symbols Xᵢ and the bits associated with them. The output of detector 58 is applied to the parallel-to-serial converter 60 which restores the data stream that was originally applied to the transmitter.

A phase-lock loop (PLL) 62 receives from the line conditioner 50 a timing reference signal transmitted from the transmitter with which it communicates (e.g., the CO transceiver) The PLL 62 locks itself to this signal and drives a clock 64 in synchronism with the Master Clock in the driving transmitter. Control of the receiver section is provided by the controller 32.

As noted earlier, the transceiver of the prevent invention will commonly be incorporated in a computer such as a personal computer; indeed, it may be implemented as an integral part of such a computer, which may have a power conservation capability for activation when the computer is not in active operation. It is thus desirable that the transceiver be able to suspend operations and enter a "sleep" mode in which it consumes reduced power when it is not needed for data transmission or reception, but nonetheless be able to resume transmission or reception almost instantaneously, e.g., with less than a one-second delay. This is accomplished in the present invention as follows.

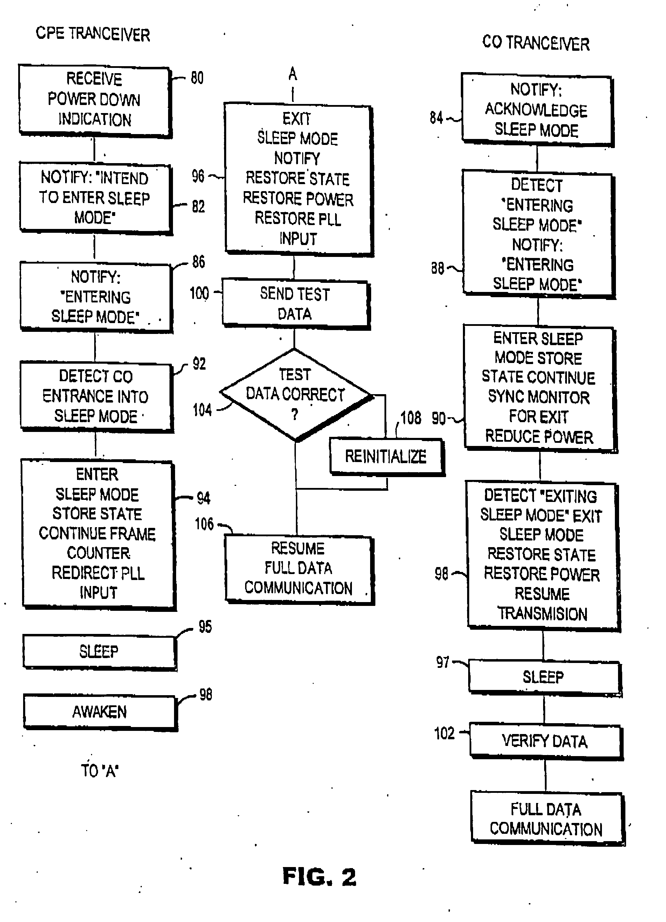

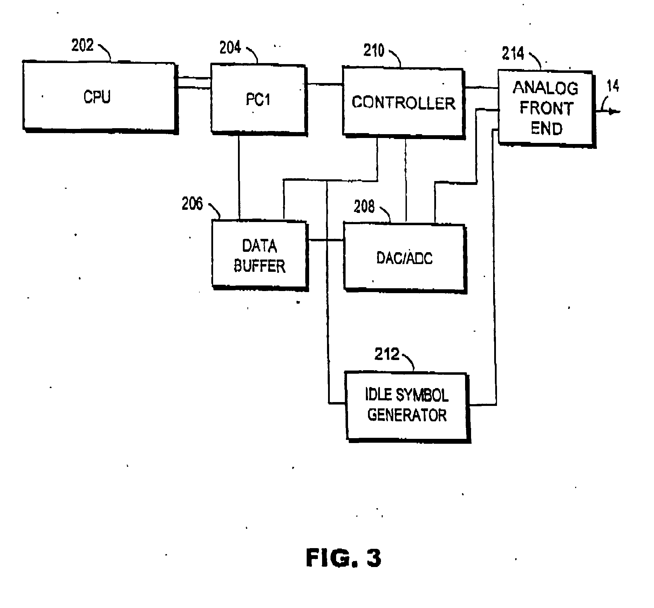

For purposes of illustration, the operation of the invention will be explained in terms of a transceiver located at a customer premises (herein termed the "CPE transceiver") communicating data over the customer's data subscriber line to a transceiver located at the central telephone office (herein referred to as the "CO transceiver"). Particular reference will be made to Figures 2 and 3 in connection with this discussion. The power down operation of the CPE transceiver begins on receipt of a power down command (step 80) by the CPE transceiver controller 32. The power down command may be applied to the controller 32 from an external source such as a personal computer in which the transceiver is included; it may be generated within the transceiver itself as a result of monitoring the input buffer 18 and determining that no data has been applied to it for a given time interval; or it may be responsive to a power down command from the CO transceiver.

Considering for the moment the first two cases, the CPE transceiver responds to the command by transmitting to the CO transceiver an "Entering Sleep Mode" signal (step 82). The CO transceiver responds by transmitting an "Acknowledge Sleep Mode" signal (step 84) to the CPE transceiver. Additionally, the CO transceiver transmits to the CPE transceiver a pilot tone (step 86) which enables the CPE transceiver to maintain synchronization with the CO transceiver during sleep mode. Specifically, as shown in Figure 1, the pilot tone is applied from the line conditioner 50 to the PLL 62 which drives the Local Clock 64 in synchrony with the Master Clock 30 at the CO transceiver. Clock 64 in turn drives the Frame Counter 66 in synchrony with the frame counter 36 at the CO transceiver.

The CO transceiver also stores its state (step 88) in receiver section state memory 38. The state preferably includes at least the frequency and time-domain equalizer coefficients (FDQ; TDQ) and the echo-canceller coefficients (ECC) of its receiver and the gain of its transmitter. The CO transceiver will also maintain the frame count and superframe count (step 90) to ensure synchrony with the remote CPE transceiver. It may, at this time, perform its own power reduction (step 92). In particular, it may reduce or cut off power to the distal modulator/demodulator portions of its transmitter and receiver sections; this provides a significant power reduction. Power will be maintained, of course, to at least that portion of the analog driver circuitry which transmits the pilot tone and other control signals to the CPE transceiver.

In response to the acknowledgment from the CO transceiver, the CPE transceiver enters the sleep mode (step 94) in which reduced or no power is applied to various components of the transceiver In particular, it stores its state (step 96) in state memory 38, including preferably at least the frequency and time-domain equalizer coefficients (FDQ; TDQ) and the echo-canceller coefficients (ECC) of its receiver section, the gain of its transmitter section, and phase and frequency offset of its phase-locked loop 62. It then powers down (step 98) its transmitter section, including both the digital modulator/demodulator circuitry and the analog line drivers.

During the sleep mode state, the CO transceiver continues to monitor (step 100) the data subscriber line for an "Awakening" signal from the CPE transceiver (step 104). The CPE transceiver transmits this signal when its controller receives an "Awaken" command (step 102) from an external source such as a computer in which it is installed or from other sources, or when its controller detects the presence of data in the input buffer 18. The CPE transceiver thereupon restores full power to its circuitry (step 106). It also retrieves its stored state from the state memory 38 (step 108). It can then immediately begin transmitting, since it need not repeat the initialization that was earlier required to establish requisite parameters (equalizer coefficients, echo canceller coefficients, gain, phase-lock-loop phase and frequency offsets, etc.). Prior to this time, of course, and in response to the "Awakening" signal from the CPE transceiver, the CO transceiver has restored its power restored its state, and is ready to receive.

On resuming communication, it may be desirable to transmit several frames of test (known) data before resuming transmission of user data. This enables the system to verify that system conditions have not changed so significantly as to require renewed initialization. If the test is satisfactory user data transmission then occurs. Otherwise, reinitialization must be performed before user data transmission occurs.

As noted earlier, the transceiver 10 may alternatively be awakened by the CO transceiver. This is preferably accomplished by means of a tone transmitted from the latter to the CPE receiver. In response to that tone, the CPE receiver performs the sequence of steps shown at 100-110 in Figure 2.

## Claims

1. In a multicarrier transceiver (10), a method of reducing power consumption comprising:
storing transmission parameters representing characteristics of a communication channel;
reducing power to portions of the transceiver (10) for entering a sleep mode;
transmitting or receiving a pilot tone for synchronization during the sleep mode;
restoring power to the portions;
restoring the transmission parameters without reinitializing the transceiver (10).

2. Method according to claim 1, further comprising transmitting a message to change a state.

3. Method according to any one or more of the above claims, wherein the reducing power comprises reducing power to parts of an analog circuitry.

4. Method according to any one or more of the above claims, wherein the transceiver (10) does not repeat an initialization that was earlier required to establish requisite parameters including one or more of equalizer coefficients, echo canceller coefficients, gain, phase-lock-loop, phase and frequency offsets, frequency and time-domain equalizer coefficients, echo-canceller coefficients (ECC) of a receiver section, gain of a transmitter section and channel corrections.

5. Method according to any one or more of the above claims, wherein an initialization includes one or more of measuring the signal-to-noise ratio of each of the subchannels, calculating the bit-allocation tables characteristic of each of the subchannels under given conditions of transmission, and exchanging the bit-allocation tables with other modems with which a given modem communicates.

6. Method according to any one or more of the above claims, further comprising verifying system conditions.

7. Method according to any one or more of the above claims, further comprising using the transceiver (10) for internet communications.

8. Method according to any one of the above claims, wherein the transceiver (10) is communicating on a common line with ordinary voice communications without the use of a splitter at the subscriber premises.

9. A multicarrier transceiver (10) capable of reducing power consumption comprising:
means for storing transmission parameters representing characteristics of a communication channel;
means for reducing power to portions of the transceiver (10) for entering a sleep mode;
means for transmitting or receiving a pilot tone for synchronization during the sleep mode;
means for restoring power to the portions;
means for restoring the transmission parameters without reinitializing the transceiver (10).

10. Transceiver according to claim 8, further comprising means for transmitting a message to change a state.

11. Transceiver according to claim 8 or 9, wherein the reducing power comprises reducing power to parts of an analog circuitry.

12. Transceiver according to any one of claims 8 to 11, wherein the transceiver (10) does not repeat an initialization that was earlier required to establish requisite parameters including one or more of equalizer coefficients, echo canceller coefficients, gain, phase-lock-loop, phase and frequency offsets, frequency and time-domain equalizer coefficients, echo-canceller coefficients (ECC) of a receiver section, gain of a transmitter section and channel corrections.

13. Transceiver according to any one of claims 8 to 12, wherein an initialization includes one or more of measuring the signal-to-noise ratio of each of the subchannels, calculating the bit-allocation tables characteristic of each of the subchannels under given conditions of transmission, and exchanging the bit-allocation tables with other modems with which a given modem communicates.

14. Transceiver according to any one of claims 8 to 13, further comprising means for verifying system conditions.

15. Transceiver according to any one of claims 9 to 14, further comprising means for using the transceiver (10) for internet communications; and/or means for communicating on a common line with ordinary voice communications without the use of a splitter at the subscriber premises.

## Patentansprüche

1. In einem Mehrträger-Transceiver (10) weist ein Verfahren zur Reduzierung des Energieverbrauchs auf:
Speichern von Übertragungsparametern, die Eigenschaften eines Kommunikationskanals repräsentieren,
Reduzieren einer Leistung von und/oder Energie zu Teilen des Transceivers (10), um in einen Schlafmodus zu gelangen,
Übertragen oder Empfangen eines Pilottons zur Synchronisation während des Schlafmodus;
Wiederherstellung der Leistung von und/oder Energie zu den Teilen;
Wiederherstellen der Übertragungsparameter ohne Reinitialisierung des Transceivers (10).

2. Verfahren nach Anspruch 1, weiter aufweisend Übertragen einer Nachricht, um einen Zustand zu ändern.

3. Verfahren nach einem oder mehreren der voranstehenden Ansprüche, wobei die Reduktion der Leistung und/oder Energie die Reduktion der Leistung von und/oder Energie zu Teilen einer analogen Schaltung umfasst.

4. Verfahren nach einem oder mehreren der voranstehenden Ansprüche, wobei der Transceiver (10) eine Initialisierung nicht wiederholt, die zuvor erforderlich war, um erforderliche Parameter einschließlich eines oder mehrerer von Entzerrungskoeffizienten, Echokompensatorkoeffizienten, Verstärkung, Phasenregelschleife, Phasen- und Frequenzoffsets, Frequenz- und Zeitbereichs-Entzerrungskoeffizienten, Echokompensatorkoeffizienten (ECC) eines Empfängerabschnitts, Verstärkung eines Transmitterabschnitts und Kanalkorrekturen zu bilden.

5. Verfahren nach einem oder mehreren der voranstehenden Ansprüche, wobei eine Initialisierung ein oder mehrere von einer Messung eines Signal-Rausch-Verhältnisses jedes der Unterkanäle, einer Berechnung der Bit-Zuweisungs-Tabellen, die charakteristisch für jeden der Unterkanäle unter bestimmten Übertragungsbedingungen sind, und einem Austausch der Bit-Zuweisungs-Tabellen mit anderen Modems, mit denen ein bestimmtes Modem kommuniziert, aufweist.

6. Verfahren nach einem oder mehreren der vorherigen Ansprüche, weiter aufweisend Verifikation von Systembedingungen.

7. Verfahren nach einem oder mehreren der vorherigen Ansprüche, weiter aufweisend Verwenden des Transceivers (10) für Internetkommunikationen.

8. Verfahren nach einem der voranstehenden Absprüche, wobei der Transceiver (10) auf einer gemeinsamen Leitung mit gewöhnlichen Sprachkommunikationen ohne die Verwendung eines Splitters in den Teilnehmerbereichen kommuniziert.

9. Mehrträger-Transceiver (10), der zur Reduktion eines Energieverbrauchs ausgebildet ist, aufweisend:
Mittel zum Speichern von Übertragungsparametern, die Eigenschaften eines Kommenikationskanals repräsentieren,
Mittel, um die Leistung von und/oder Energie zu Teilen des Transceivers (10) zu reduzieren, um in einen Schlafmodus zu gelangen,
Mittelzur Übertragung oder zum Empfang eines Pilottons zur Synchronisierung während des Schlafmodus;
Mittel, um die Leistung von und/oder Energie zu den Teilen wiederherzustellen, Mittel, um die Übertragungsparameter wiederherzustellen, ohne den Transceiver (10) zu reinitialisieren.

10. Transceiver nach Anspruch 8, weiter aufweisend Mittel, um eine Nachricht zu übertragen, um einen Zustand zu ändern.

11. Transceiver nach Anspruch 8 oder 9, wobei die Reduktion der Leistung und/oder Energie die Reduzierung der Leistung von und/oder Energie zu Teilen einer analogen Schaltung aufweist.

12. Transceiver nach einem der Ansprüche 8 bis 11, wobei der Transceiver (10) eine Initialisierung nicht wiederholt, die zuvor erforderlich war, um erforderliche Parameter einschließlich einen oder mehrere von Entzerrungskoeffizienten, Echokompensatorkoeffizienten, Verstärkung, Phasenregelschleife, Phasen- und Frequenzoffsets, Frequenz und Zeitbereichs-Entzerrungskoeffizienten, Echokompensatorkoeffizienten (ECC) eines Empfängerabschnitts, Verstärkung eines Transmitterabschnitts und Kanalkorrekturen zu bilden.

13. Transceiver nach einem der Absprüche 8 bis 12, wobei eine Initialisierung eine oder mehrere von der Messung des Signal-Rausch-Verhältnisses jedes der Unterkanäle, Berechnung der Bit-Zuweisungs-Tabellen, die charakteristisch für jeden der Unterkanäle unter bestimmten Übertragungsbedingungen sind, und Austausch der Bit-Zuweisungs-Tabellen mit anderen Modems, mit denen ein bestimmtes Modem kommuniziert, aufweist.

14. Transceiver nach einem der Ansprüche 8 bis 13, weiter aufweisend Mittel zur Verifikation von Systembedingungen.

15. Transceiver nach einem der Ansprüche 9 bis 14, weiter aufweisend Mittel zur Verwendung des Transceivers (10) für Internetkommunikationen, und/oder Mittel zur Kommunikation auf einer gemeinsamen Leitung mit gewöhnlichen Sprachkommunikatianen ohne die Verwendung eines Splitters in den Teilnehmerbereichen.

## Revendications

1. Procédé, dans un émetteur-récepteur multiporteuse (10), de réduction de consommation de puissance, comprenant les étapes ci-dessous consistant à :
stocker des paramètres de transmission représentant des caractéristiques d'un canal de communication ;
réduire une puissance sur des parties de l'émetteur-récepteur (10) en vue d'entrer dans un mode de mise à veille ;
transmettre ou recevoir une fréquence pilote en vue d'une synchronisation au cours du mode de mise à veille ;
restaurer la puissance sur les parties ;
restaurer les paramètres de transmission sans réinitialiser l'émetteur-récepteur (10).

2. Procédé selon la revendication 1, comprenant en outre la transmission d'un message visant à modifier un état.

3. Procédé selon l'une quelconque ou plusieurs des revendications précédentes, dans lequel la réduction de puissance comprend une réduction de puissance sur des parties d'un montage de circuits analogiques.

4. Procédé selon l'une quelconque ou plusieurs des revendications précédentes, dans lequel l'émetteur-récepteur (10) ne répète pas une initialisation qui était précédemment nécessaire pour établir des paramètres requis incluant un ou plusieurs des éléments parmi des coefficients d'égaliseur, des coefficients de suppresseur d'écho, un gain, une boucle à verrouillage de phase, des décalages de fréquence et de phase, des coefficients d'égaliseur de domaine temporel et fréquentiel, des coefficients de suppresseur d'écho (ECC) d'une section de récepteur, un gain d'une section d'émetteur et des corrections de canal.

5. Procédé selon l'une quelconque ou plusieurs des revendications précédentes, dans lequel une initialisation inclut une ou plusieurs étapes parmi la mesure du rapport « signal sur bruit » de chacun des sous-canaux, le calcul de la caractéristique de tables d'affection de bits de chacun des sous-canaux dans des états de transmission donnés, et l'échange des tables d'affection de bits avec d'autres modems avec lesquels un modem donné communique.

6. Procédé selon l'une quelconque ou plusieurs des revendications précédentes, comprenant en outre la vérification d'états système.

7. Procédé selon l'une quelconque ou plusieurs des revendications précédentes, comprenant en outre l'utilisation de l'émetteur-récepteur (10) pour des communications Internet.

8. Procédé selon l'une quelconque des revendications précédentes, dans lequel l'émetteur-récepteur (10) communique sur une ligne commune avec des communications vocales ordinaires sans utiliser un séparateur au niveau des installations de l'abonné.

9. Émetteur-récepteur multiporteuse (10) apte à réduire une consommation de puissance, comprenant :
un moyen pour stocker des paramètres de transmission représentant des caractéristiques d'un canal de communication ;
un moyen pour réduire une puissance sur des parties de l'émetteur-récepteur (10) en vue d'entrer dans un mode de mise à veille ;
un moyen pour transmettre ou recevoir une fréquence pilote en vue d'une synchronisation au cours du mode de mise à veille ;
un moyen pour restaurer la puissance sur les parties ;
un moyen pour restaurer les paramètres de transmission sans réinitialiser l'émetteur-récepteur (10).

10. Émetteur-récepteur selon la revendication 8, comprenant en outre un moyen pour transmettre un message visant à modifier un état.

11. Émetteur-récepteur selon la revendication 8 ou 9, dans lequel la réduction de puissance comprend une réduction de puissance sur des parties d'un montage de circuits analogiques.

12. Émetteur-récepteur selon l'une quelconque des revendications 8 à 11, dans lequel l'émetteur-récepteur (10) ne répète pas une initialisation qui était précédemment nécessaire pour établir des paramètres requis incluant un ou plusieurs des éléments parmi des coefficients d'égaliseur, des coefficients de suppresseur d'écho, un gain, une boucle à verrouillage de phase, des décalages de fréquence et de phase, des coefficients d'égaliseur de domaine temporel et fréquentiel, des coefficients de suppresseur d'écho (ECC) d'une section de récepteur, un gain d'une section d'émetteur et des corrections de canal.

13. Émetteur-récepteur selon l'une quelconque des revendications 8 à 12, dans lequel une initialisation inclut une ou plusieurs étapes parmi la mesure du rapport « signal sur bruit » de chacun des sous-canaux, le calcul de la caractéristique de tables d'affection de bits de chacun des sous-canaux dans des états de transmission donnés, et l'échange des tables d'affection de bits avec d'autres modems avec lesquels un modem donné communique.

14. Émetteur-récepteur selon l'une quelconque des revendications 8 à 13, comprenant en outre un moyen pour vérifier des états système.

15. Émetteur-récepteur selon l'une quelconque des revendications 9 à 14, comprenant en outre un moyen pour utiliser l'émetteur-récepteur (10) pour des communications Internet ; et/ou un moyen pour communiquer sur une ligne commune avec des communications vocales ordinaires sans utiliser un séparateur au niveau des installations de l'abonné.
